# EUROPÄISCHE PATENTANMELDUNG

(11) **EP 1 459 967 A1**
(43) Veröffentlichungstag der Anmeldung: **22.09.2004**
(21) Anmeldenummer: 03006337.4
(22) Anmeldetag: 20.03.2003
(51) Int. Cl.: B62J 6/06, B62J 6/04, B62J 6/00, B62M 3/12

(54) **Leuchtmittel in einer Fahrradpedale**

(71) Anmelder: Erb, Richard, Dajr, Taipei (TW); Chiang, Hsueh Wen, Chung Ho City, Taipei Hsien (TW)
(72) Erfinder: Chiang, Hsueh Wen, Chung Ho City, Taipei Hsien (TW)
(74) Vertreter: Hanewinkel, Lorenz

(57) **Zusammenfassung**

Die Erfindung beschreibt Leuchtmittel in einer Fahrradpedale mit einem in Lagern (3,4) sich um eine Pedalachse (2) drehenden Pedalrahmen (1), wobei an diese angeschlossen in der Pedale mindestens ein elektromagnetischer Generator (9, 10, 11, 12) integriert ist und jeder Generator (9, 10, 11, 12) mit mindestens einem elektrischen Leuchtmittel (6, 7, 15) verbunden ist, so dass es beim Drehen der Pedale leuchtet.

## Beschreibung

Die Erfindung betrifft ein Leuchtmittel in einer Fahrradpedale mit einem in Lagern sich um eine Pedalachse drehenden Pedalrahmen.

Bei der bekannten Beleuchtung von Fahrrädern werden die Lichter von einem Generator (Dynamo) zum Leuchten gebracht, der von dem Vorder- oder Hinterrad durch Friktion angetrieben ist. Die erzeugte Energie lässt sich einfach über Kabel zum Vorder- und Rücklicht bringen, da keine Lager von sich ständig drehenden Teilen überwunden werden müssen. Aus diesem Grund lässt sich die Energie nur sehr aufwendig zu den Pedalen bringen.
Das Bedürfnis nach einem Leuchtmittel an den Pedalen ist aber groß. Von daher sind an den Pedalen passive Rückstrahlgläser für Fremdlicht vorgeschrieben.
Blinkende Sicherheitslichter werden von den Fahrradfahrern immer mehr eingesetzt. Dafür werden blinkende Leuchtdioden genutzt, die am Hinterrad oder am Sattel oder am Fahrradfahrer selbst angebracht sind. Sie sind von Batterien gespeist, die immer wieder aufwendig ersetzt oder nachgeladen werden müssen.

Es ist Aufgabe der Erfindung, ein Leuchtmittel für die Pedalen eines Fahrrades anzugeben, das beim Fahren selbstständig leuchtet, einfach und preiswert ist und das keinerlei Wartung bedarf.

Gelöst wird diese Aufgabe dadurch, dass in der Pedale an die Pedalachse und den Pedalrahmen mindestens ein elektromagnetischer Generator integriert ist und dieser Generator mit einem elektrischen Leuchtmittel verbunden ist, so dass es beim Drehen der Pedale leuchtet.

Vorteilhafte Ausgestaltungen der Erfindung sind in den Unteransprüchen angegeben.

Die Drehung des Pedalrahmens um die Pedalachse erzeugt die notwendige elektrische Energie im Generator, um ein oder mehrere Leuchtmittel zum Leuchten zu bringen. Somit ist keine weitere Energiezufuhr aus Batterien notwendig.

Als Lichtquelle eignen sich besonders hocheffektive Leuchtdioden, die mit wenig Energie ein weithin sichtbares Licht abgeben. Von solchen Leuchtdioden sind ein oder mehrere an den Generator angeschlossen.

Beim Treten wird durch die Drehung des Pedalrahmens um die Pedalachse im Generator eine Wechselspannung mit einer Frequenz erzeugt, die der Drehgeschwindigkeit entspricht. Durch die Gleichrichterwirkung und die Schwellspannung einer Leuchtdiode fließt der Strom nur während einer kurzen Periode einer Halbwelle der Wechselspannung durch die Leuchtdiode. Damit ergibt sich ein blinkender Effekt, der die Aufmerksamkeit anderer Verkehrsteilnehmer erhöht.

Wenn mindestens zwei Leuchtdioden in die Pedale eingebaut sind, ist es günstig, diese in unterschiedlicher Polarität an den Generator anzuschließen. Der Strom fließt damit in den unterschiedlichen Halbwellen durch die Dioden, die damit abwechselnd blinken.

Das Licht ist je nach Bedürfnis in unterschiedliche Richtungen ausgerichtet. So kann das Licht seitlich vom Fahrrad abstrahlen. Diese Richtung wird durch die bekannten Sicherheitslichter nicht berücksichtigt; nur die passiven Reflektoren in den Speichen eines üblichen Fahrrades sind seitlich ausgerichtet. Durch ein kreisendes Blinklicht wird die seitliche Erkennbarkeit des Fahrradfahrers weiter erhöht, wenn die Leuchtdiode(n) dahin ausgerichtet ist/sind. Wenn das Leuchtmittel an mindestens einer Längsseite des Pedalrahmens angebracht ist, ergibt sich ein Blinklicht in und/oder gegen die Fahrtrichtung. Durch die Integration des Blinklichts in die üblicherweise vorhandenen Reflektoren der Pedalen, wird die Erkennbarkeit weiter gesteigert.

Ein günstiger und preiswerter Aufbau des Generators ergibt sich durch die Verbindung eines Permanentmagneten mit der Pedalachse und eine in dem Pedalrahmen um den Permanentmagneten gelegte Generatorwicklung. Sonstige, für einen Generator notwendige Bauteile sind in der Pedale mit ihrer Achse, den Lagern und dem Pedalrahmen schon gegeben. Durch den direkten Anschluss einer Leuchtdiode an die Generatorwicklung sind die notwendigen Komponenten eines Sicherheitslichts vorhanden.

Für die Versorgung von den aktiven Leuchtmitteln in den Reflektoren der Pedale ist es günstig, den Generator an dem inneren, zum Fahrradrahmen gerichteten Lager der Pedale anzuordnen. Es ergibt sich eine einfache Leitungsführung zu den Leuchtdioden im Pedalrahmen.

Für die Versorgung von einem seitlich strahlenden Licht an der Pedalstirnseite ist es günstig, den Generator mit dem dortigen äußeren Lager der Pedale zu kombinieren.
Auf vorhandene Pedalen ist das Leuchtmittel äußerst einfach nachrüstbar, wenn es anstelle der ansonsten vorhandenen Staubschutzkappe mit dem Magnetanker auf die Abschlussmutter des äußeren Lagers aufgesteckt und der Wicklungsträger mit der Leuchtdiode in den Pedalrahmen eingeklemmt wird.

Dabei ist es vorteilhaft, den Träger für die Leuchtdiode aus transparentem Kunststoff herzustellen. Dann ist die Leuchtdiode in den Kunststoff integriert und damit vor äußeren Einwirkungen geschützt.

Der Träger der Leuchtdiode ist vorteilhaft so ausgeführt, dass er ein optisches Mittel für die seitliche Lichtstreuung bildet, die damit einen weiten Erkennungswinkel bietet.

Die Ausgestaltung der Erfindung ist in den Figuren beispielhaft beschrieben.

Fig. 1 zeigt einen Schnitt durch eine Fahrradpedale mit zwei Generatoren und mehreren Leuchtdioden.
Fig. 2 zeigt die Schaltung der Leuchtdioden.

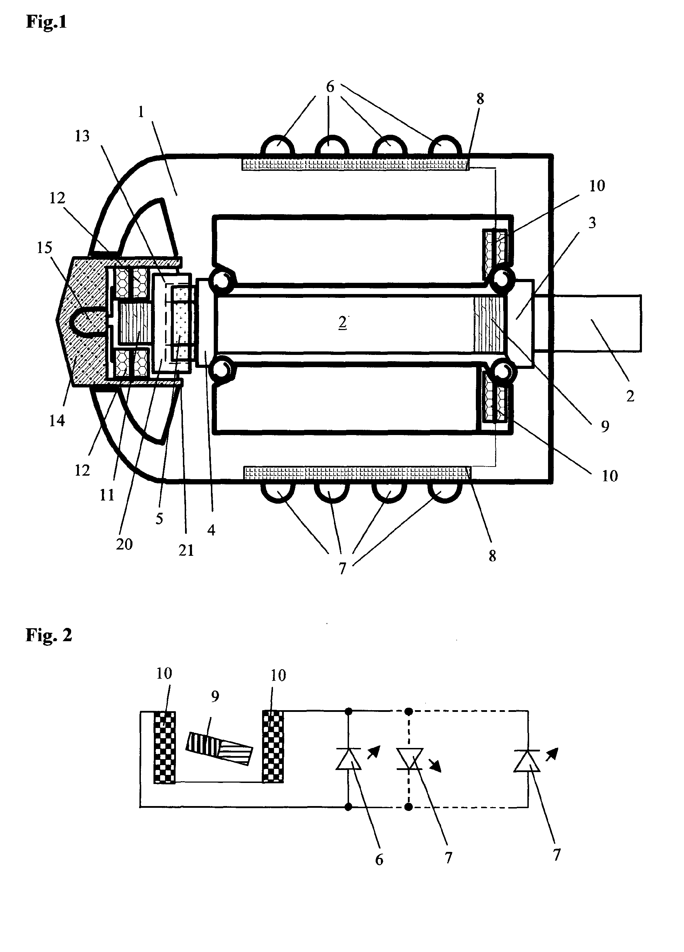

In Fig. 1 ist der Pedalrahmen 1 gezeigt, der sich beim Treten um die Pedalachse 2 dreht und dabei mit dem inneren Lager 3 und dem äußeren Lager 4 gelagert ist. Die Abschlussmutter 5 hält die Pedale zusammen.
Die vorderen Leuchtdioden 6 strahlen in Fahrtrichtung ab, die hinteren Leuchtdioden 7 entgegen der Fahrtrichtung. Sie sind in das jeweilige Reflektorglas 8 eingebaut.
Am inneren Lager 3 ist der Permanentmagnet 9 mit der Achse 2 verbunden. Im Pedalrahmen 1 ist die Generatorwicklung 10 angeordnet. Beim Treten dreht sich der Permanentmagnet 9 in der Generatorwicklung 10 und induziert damit in der Generatorwicklung 10 Wechselstrom, der die Leuchtdioden 6 und 7 zum Leuchten bringt.
Auf der Abschlussmutter 5 sitzt mit einer eng passenden Muffe der Magnethalter 13, der den stirnseitigen Permanentmagneten 11 trägt. In den Pedalrahmen 1 ist in einer Ringnut 21 der Lichthalter 14 eingeklemmt, in welcher die Generatorwicklung 12 den Magneten 11 koaxial umschließend eingebaut ist. Auch hier dreht sich der Permanentmagnet 11 beim Treten über die Generatorwicklung 12 und induziert Wechselspannung. Diese Wechselspannung bringt die seitliche Leuchtdiode 15 zum Blinken, die stirnseitig in den Lichthalter 14 integriert ist. Der Lichthalter 14 ist aus transparentem Kunststoff gefertigt und dient auch als Verteileroptik für die gezielte Lichtabgabe der Leuchtdiode 15.

In Fig. 2 ist die Schaltung der Leuchtdioden dargestellt. Der sich drehende Permanentmagnet 9 und die Generatorwicklung 10 bilden den Generator für die Versorgung der Leuchtdioden 6 und 7, die direkt an die Generatorwicklung 10 angeschlossen sind. Die Polung der Leuchtdioden 6 und 7 bestimmt, bei welcher Halbwelle Strom fließt und die Leuchtdioden blinken.

### Bezugszeichenliste

- 1: Pedalrahmen
- 2: Pedalachse mit Einschraubgewinde
- 3: Inneres Lager
- 4: Äußeres Lager
- 5: Abschlussmutter
- 6: Vordere Leuchtdioden
- 7: Hintere Leuchtdioden
- 8: Reflektorglas
- 9: Innerer Permanentmagnet
- 10: Innere Generatorwicklung
- 11: Äußerer Permanentmagnet
- 12: Äußere Generatorwicklung
- 13: Magnethalter
- 14: Lichthalter
- 15: Seitliche Leuchtdiode
- 20: Muffe
- 21: Ringnut

## Patentansprüche

1. Leuchtmittel in einer Fahrradpedale mit einem in Lagern (3,4) sich um eine Pedalachse (2) drehenden Pedalrahmen ( 1 ), wobei an diese angeschlossen in der Pedale mindestens ein elektromagnetischer Generator (9, 10, 11, 12) integriert ist und jeder Generator (9, 10, 11, 12) mit mindestens einem elektrischen Leuchtmittel (6, 7, 15) verbunden ist, so dass es beim Drehen der Pedale leuchtet.

2. Leuchtmittel nach Anspruch 1, **dadurch gekennzeichnet, dass** das Leuchtmittel aus mindestens einer Leuchtdiode (6, 7, 15) gebildet ist.

3. Leuchtmittel nach Anspruch 2, **dadurch gekennzeichnet, dass** die Leuchtdioden (6, 7, 15) mit Wechselstrom in der Frequenz des Drehens der Pedale versorgt sind und damit blinken.

4. Leuchtmittel nach Anspruch 3, **dadurch gekennzeichnet, dass** verschiedene Leuchtdioden (6, 7, 15) alternativ angeschlossen abwechselnd blinken.

5. Leuchtmittel nach Anspruch 2, **dadurch gekennzeichnet, dass** die Leuchtdiode (15) stirnseitig an der Pedale in Richtung der Pedalachse (2) orientiert angeordnet ist.

6. Leuchtmittel nach Anspruch 2, **dadurch gekennzeichnet, dass** die Leuchtdioden (6, 7) längsseitig des Pedalrahmens (1) radial zur Pedalachse (2) orientiert ein oder beidseitig angeordnet sind.

7. Leuchtmittel nach Anspruch 6, **dadurch gekennzeichnet, dass** die Leuchtdioden (6, 7) in Reflektoren (8) der Pedale integriert sind.

8. Leuchtmittel nach Anspruch 1, **dadurch gekennzeichnet, dass** der/die Generator(en) durch einen Permanentmagneten (9,11), der mit der Pedalachse (2) verbunden ist, und durch eine Generatorwicklung (10, 12), die mit dem Pedalrahmen (1) verbunden ist, gebildet ist.

9. Leuchtmittel nach Anspruch 8, **dadurch gekennzeichnet, dass** der Generator (9, 10) neben dem kurbelseitigen Lager (3) der Pedale eingebaut ist.

10. Leuchtmittel nach Anspruch 8, **dadurch gekennzeichnet, dass** der Generator (11, 12) zusammen mit der Leuchtdiode (15) in einem Halter (14) an dem freien Ende der Pedalachse (2) und des Pedalrahmens (1) mit diesem verbunden angebracht ist.

11. Leuchtmittel nach Anspruch 10, **dadurch gekennzeichnet, dass** der Halter (14) anstelle einer Staubschutzkappe in deren Aufnahme am Pedalrahmen (1) festgelegt ist und der Permanentmagnet,(11) mit einer Muffe (20) auf einer Abschlussmutter (5) der Pedalachse (2) festgelegt ist.

12. Leuchtmittel nach Anspruch 11, **dadurch gekennzeichnet, dass** der Halter (14) für die Leuchtdiode (15) und die Generatorwicklung 12 aus transparentem Kunststoff hergestellt ist.

13. Leuchtmittel nach Anspruch 12, **dadurch gekennzeichnet, dass** der Halter (14) für die Leuchtdiode (15) als ein lichtverteilendes Optikmittel ausgeformt ist.
